# EUROPEAN PATENT APPLICATION

(11) **EP 4 439 922 A1**
(43) Date of publication of application: **02.10.2024**
(21) Application number: 24168101.4
(22) Date of filing: 02.04.2024
(51) Int. Cl.: H02J 7/00, B60L 58/22, H01M 10/42, H01M 10/48

(54) **BOLT ON ACTIVE BALANCERS**

(30) Priority: 30.03.2023 US 202363455668 P; 28.03.2024 US 202418620883
(71) Applicant: Electric Power Systems, Inc., North Logan, Utah 84341-7005 (US)
(72) Inventor: ARMSTRONG, Michael, North Logan (US)
(74) Representative: Abel & Imray LLP

(57) **Abstract**

An active balancing module configured to actively balance a battery module in a battery system can comprise a housing and an active balancing circuit. The active balancing module can be configured to receive operational instructions from a control module of a battery system or independently control balancing between adjacent battery modules in the battery system.

## Description

### CROSS-REFERENCE TO RELATED APPLICATIONS

This application claims priority to, and the benefit of, US Provisional Patent Application No. 63/455,668, filed on March 30, 2023 and titled "BOLT ON ACTIVE BALANCERS", and US Non-Provisional Patent Application No. 18/620,883, filed on March 28, 2024 and titled "BOLT ON ACTIVE BALANCERS".

### FIELD

The present disclosure generally relates to add-on active balancing for batteries and battery systems, and more particularly to active balancing circuits and modules that can be added and removed after-market to batteries, battery modules, or battery systems to extend the life of the battery, leverage power available in the battery system, and/or decrease the weight of the battery when needed

### BACKGROUND

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may be inventions.

Active balancing circuits can extend the usefulness of batteries and accommodate mismatch in a battery module. However, future battery applications can be sensitive to the weight of the battery, and the addition of active balancing circuits in a battery module adds potentially unnecessary weight. For example, when powering an aircraft or other vehicle, weight can be a significant variable because weight impacts an amount of lift needed for the aircraft to fly. Typical battery modules include active balancing circuits that are integrated into the module or pack and are disposed internal to a housing of the battery module.

### BRIEF DESCRIPTION OF THE DRAWINGS

The subject matter of the present disclosure is particularly pointed out, and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a single active balancing circuit coupled to a battery module, in accordance with various embodiments.
FIG. 2 illustrates a battery system comprising a plurality of active balancing circuits and a plurality of battery modules coupled with high voltage terminals on the plurality of active balancing circuits and the plurality of battery modules and a communication terminal, in accordance with various embodiments.
FIG. 3 illustrates a battery module adjacently attached to an active balancing module by a high voltage terminal, in accordance with various embodiments.
FIG. 4 illustrates a battery system with two active balancing modules coupled by a battery module in series, in accordance with various embodiments.
FIG. 5A illustrates a portion of a battery system with multiple battery modules and multiple active balancing modules in series, wherein the battery modules are adjacently attached, and the active balancing modules are integrated between the battery modules, in accordance with various embodiments.
FIG. 5B illustrates a portion of a battery system with multiple battery modules and multiple active balancing modules in series, wherein the battery modules are adjacently attached, and the active balancing modules are integrated between the battery modules, in accordance with various embodiments.
FIG. 6 illustrates a method for reversibly adding an active balancing module to a battery system.
FIG. 7 illustrates a method of moving a battery module from a first battery system to a second battery system containing an active balancing module.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

A "battery module," for purposes of this disclosure, includes a plurality of electrically connected electrochemical or electrostatic cells, hereafter referred to collectively as "cells." This plurality of cells may, in turn, be electrically coupled together in parallel, series, or a combination of both, that can be charged electrically to provide a static potential for power or released electrical charge when needed. When cells are assembled into a battery module, the cells are often linked together through metal strips, straps, wires, bus bars, etc., that are welded, soldered, or otherwise fastened to each cell to link them together in the desired configuration.

A cell may be comprised of at least one positive electrode and at least one negative electrode. One common form of such a cell is the well-known secondary cells packaged in a cylindrical metal can or in a prismatic case. Examples of chemistry used in such secondary cells are lithium cobalt oxide, lithium manganese, lithium iron phosphate, nickel cadmium, nickel zinc, and nickel metal hydride.

A battery system may employ active balancing methods or devices to increase the longevity and capacity of the battery system. A battery system may comprise two or more battery modules, wherein each battery module may be at a different state of charge due to variances between the battery modules in manufacturing, wear, or other environmental impacts from temperature and operating asymmetries, different levels of use for each of the battery modules (e.g., a newly manufactured battery module compared to a secondary life of a battery module previously used for powering an electrically powered aircraft, or the like). Active balancing allows a battery system with two or more battery modules to maintain equivalent states of charge in each battery module of the battery system. A battery system's overall performance may be limited by the battery module at the lowest state of charge. Active balancing may function by drawing energy from the battery module with the largest state of charge and transferring the energy to battery modules with lesser states of charge to reach equal voltages in each battery module. The energy may be passed through capacitors, inductors, or DC-DC converters. A battery module with a higher state of charge may be placed in circuit with a reservoir capacitor, and the reservoir capacitor may then be removed and placed in circuit with a battery module with a lower state of charge. In other embodiments of active balancing, a DC-to-DC convertor may be connected to all battery modules of a battery system.

Active balancing can be implemented using topologies that utilize battery module bypass equalization, wherein the current may bypass the cells that are at maximum states of charge until all of the cells reach maximum states of charge.

Active balancing may also be achieved using "cell-to-cell" methods at a battery module level. These methods pass excess energy in one battery module to an adjacent batter module if the adjacent battery module is at a lower state of charge. The implementation of cell-to-cell methods for active balancing of battery modules may comprise coupling a capacitor to a battery module with a high state of charge, then decoupling the capacitor and recoupling the capacitor to an adjacent battery module with a lower state of charge. Inductors may also be utilized instead of the capacitor to pass the energy from one battery module to an adjacent battery module, in various embodiments of active cell balancing using cell-to-cell methods.

Active cell balancing may also be achieved using "cell-to-system" equalization methods, wherein energy is drawn from the battery module in the system with the highest state of charge and transferred evenly to all of the remaining battery modules. Conversely, system-to-cell equalization transfers energy from the entire system to the battery module with the lowest state of charge.

In an initial application of a battery module, an active balancing circuit may be undesirable because of added cost, weight, or complexity. "Active cell balancing," as referred to herein includes cell balancing techniques that use inductive charge shuttling or capacitive charge shuttling to transfer a charge between cells (or modules). Stated another way, an "active cell balancing circuit" as referred to herein, is configured to transfer energy throughout a battery system to where the energy is desired within the battery system. Additionally, as aerospace applications may be heavily regulated, having battery modules with a wide difference in battery capacity may be unlikely, so an active balancing circuit may not be necessary. An initial application can be the powering of a vehicle such as an aircraft or car. An "active balancing circuit" (e.g., a retrofittable active balancing circuit) may be embodied in an active balancing module that provides the ability to add this active balancing feature to the battery module without performing a battery maintenance function. For example, the active balancing module disclosed herein can leverage the existing high voltage terminals of the battery module to provide an isolated low voltage output from the battery module in a secondary life application of the battery module. "High voltage," as referred to herein includes any voltage over 600 volts, or voltages between 601 and 5,000 volts. Although described herein as being utilized with high voltage battery modules, the present disclosure is not limited in this regard, and other applications of lower voltage are within the scope of this disclosure. "Low voltage output" as referred to herein includes any voltage less than 600 volts, or less than 300 volts, or less than 260 volts, or less than 130 volts, or between 60 volts and 270 volts, or less than 50 volts, in accordance with various embodiments.

In various embodiments, in the secondary life application for the battery modules disclosed herein, the balancing circuits in the active balancing modules can be bi-directional to allow for balancing during charge and discharge. Active battery management circuits can compensate for disparate aging of battery modules within a battery system. Active battery management circuits may achieve this by adding secondary power outputs of the battery and using these outputs to manage the consumption of energy within the battery depending on cell capacity remaining.

The active balancing module provides the ability to add an active battery management circuit to a battery when desired and enables re-use of the active battery management circuit when batteries are at the end of life. Active balancing can extend the usefulness of batteries and accommodate mismatch in battery modules in a system, especially during secondary life. The usefulness (i.e., efficiency) of battery modules in a secondary life application can be increased by applying active balancing techniques. This increase in usefulness can be attributed to the active balancing circuit's ability to: (1) leverage more of the available battery energy in the battery module system, (2) more rapidly balance the battery module system, and/or (3) average out the wear and tear between battery modules during use, in accordance with various embodiments.

An active balancing module (e.g., a retrofittable active balancing module) can allow for the option to install the battery modules into a battery system with or without this feature. For example, the battery modules may be installed with reduced mass for applications where active balancers are not desired (i.e., battery systems that have little to no mismatch between battery modules, such as a newly manufactured battery system with newly manufactured battery modules). Then, once the battery module no longer meets an airworthiness standard (i.e., a set standard for battery modules in aeronautical applications), the active balancing module can be installed with the battery module in a secondary application to account for mismatch between battery modules in the secondary life application.

Applying active balancing circuits at the module level can also be used to compensate for mismatched aging of battery modules. In some embodiments, the addition of the active balancing circuit is coupled to an existing battery module (e.g., by attaching it to the exterior of the battery module). The active balancing circuit can then be configured to allow access to the power terminal of the battery module when it is installed in a series configuration with other battery modules.

These active balancing modules can be installed or removed, and the battery system can function with or without this device depending on the application. This function therefore is available for secondary life applications and can be absent for primary vehicle operations if it is desirable.

The active balancing module can balance out the loading of each battery module in a series of battery modules and prop up battery modules that are at a lower remaining capacity. This balancing function does not disrupt the function of the passive balancers that act at the cell level.

A separate active balancing circuit packaged in its own independent housing may allow it to be removed and reinstalled during battery module replacement. Moreover, each module can be configured with a balancing module attached mechanically to it. In some embodiments, battery modules can be adjacently attached, and the balancing module may be integrated between the adjacent battery modules to minimize harnessing challenges.

In another embodiment, the active balancing modules can be integrated into a cradle or rack system which would be configured to mechanically receive and retain the balancing modules.

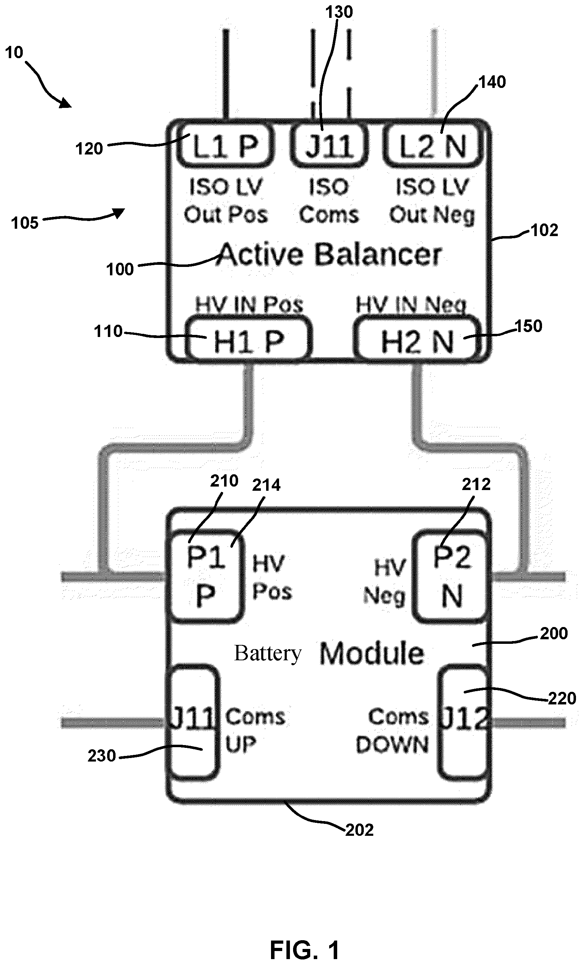

Referring now to FIG. 1, a schematic view of a retrofitted battery module 10 is illustrated, in accordance with various embodiments. In various embodiments, the retrofitted battery module 10 comprises an active balancing module 100 coupled to a battery module 200. The active balancing module 100 comprises a housing 102 and an active balancing circuit 105 disposed within the housing 102. Similarly, the battery module 200 comprises a housing 202 and a plurality of cells interconnected within the housing 202 as described previously herein.

The active balancing module 100 is electrically and physically coupled to the battery module 200. In various embodiments, the physical and electrical coupling of the active balancing circuit can be in the same location. However, the present disclosure is not limited in this regard. For example, the active balancing module 100 can include additional physical couplings to the battery module 200 separate from the electrical coupling and still be within the scope of this disclosure.

In various embodiments, the active balancing module 100 may be coupled to the exterior of the battery module 200. The connection may be achieved in some embodiments by a connection from the high voltage positive input terminal 110 of the active balancing circuit 105 to power terminals 210 (e.g., high voltage positive power terminal) on the battery module 200 and a connection from the high voltage negative input 150 to a power terminal (e.g., high voltage negative power terminal) in the power terminals 210. The power terminals 210 of the battery module 200 comprise a high voltage negative terminal 212 and a high voltage positive terminal 214. In various embodiments, the active balancing circuit also has available terminals for low voltage positive output 120, a low voltage negative output 140, and a communication terminal 130.

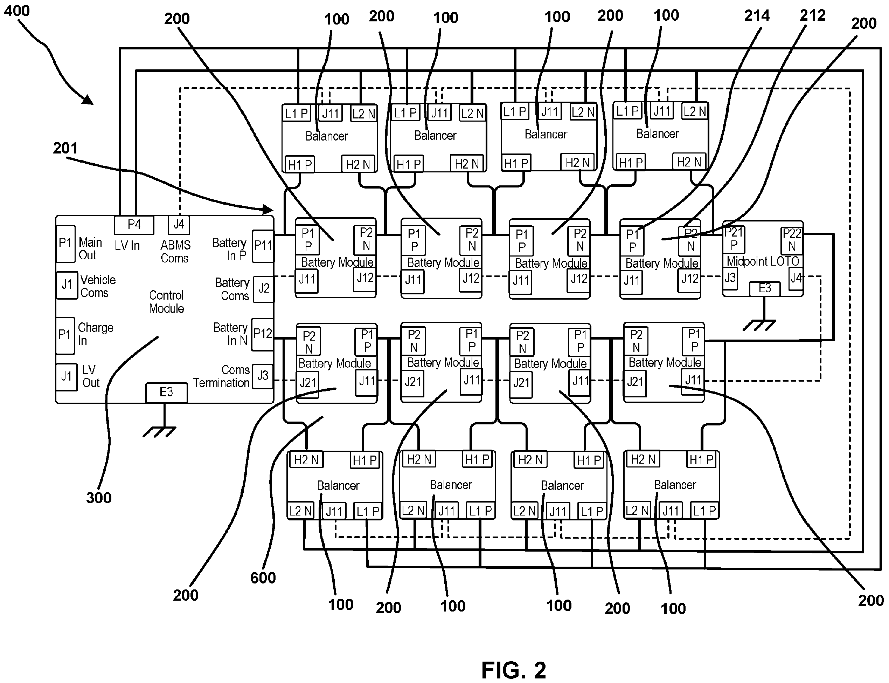

Referring now to FIG. 2, a schematic view of a battery system 400 is illustrated, in accordance with various embodiments. The battery system 400 comprises a plurality of the active balancing module 100, a plurality of battery modules 201, and a control module 300. In various embodiments, each battery module 200 in the plurality of the battery modules 200 can be coupled to a respective active balancing module 100 in the plurality of active balancing module 100. Stated another way, the battery system 400 can comprise a plurality of the retrofitted battery module 10 from FIG. 1 electrically coupled together (e.g., in series or in parallel). Although illustrated as being coupled together in series, the present disclosure is not limited in this regard. For example, the battery modules 200 in the plurality of the battery module 201 can be coupled together in series or parallel and be within the scope of this disclosure.

In an example embodiment, a plurality of battery modules 201 may form a battery system 400. The plurality of battery modules 201 may be arranged in series and an active balancing module 100 may be coupled to each battery module 200 (e.g., to form a retrofitted battery module 10 as shown in FIG. 1). In various embodiments the active balancing circuits 105 may also be in series. The battery system may include a lockout/tagout circuit breaker in series with the battery modules. The battery system may also include a control module 300 coupled to the series of battery modules and to the series of active balancing circuits. The control module 300 may comprise a circuit that includes a low voltage input terminal from the battery system, communication terminal for the active battery management system, battery communication terminals, vehicle communication terminals, and a low voltage output terminal.

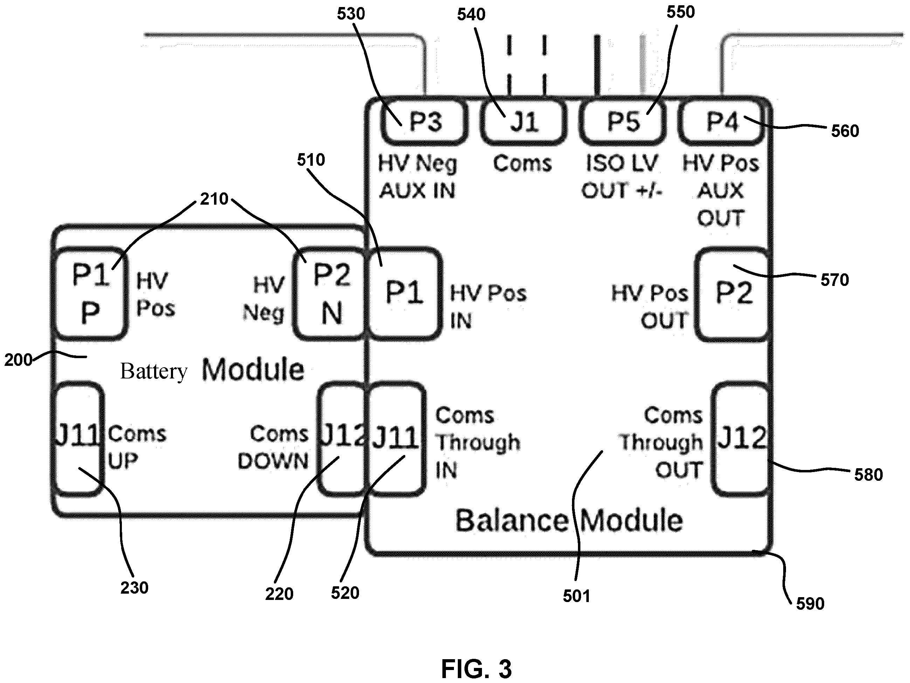

Referring to FIG. 3, a schematic view of a battery system is illustrated in accordance with various embodiments. The active balancing circuit may be encapsulated in an enclosure 590 to form an active balancing module 501. In various embodiments, this active balancing module may comprise a communication terminal through input 520, high voltage negative auxiliary input 530, a communication terminal 540, a low voltage output terminal 550, a high voltage positive auxiliary output 560, a high voltage positive output terminal 570, and a communication terminal through output 580. The active balancing module high voltage positive input 510 can connect to a power terminal of the battery module 200, and the active balancing module communication terminal through input 520 can connect to the battery communication terminal DOWN 220 to achieve an active balancing function in the battery module 200.

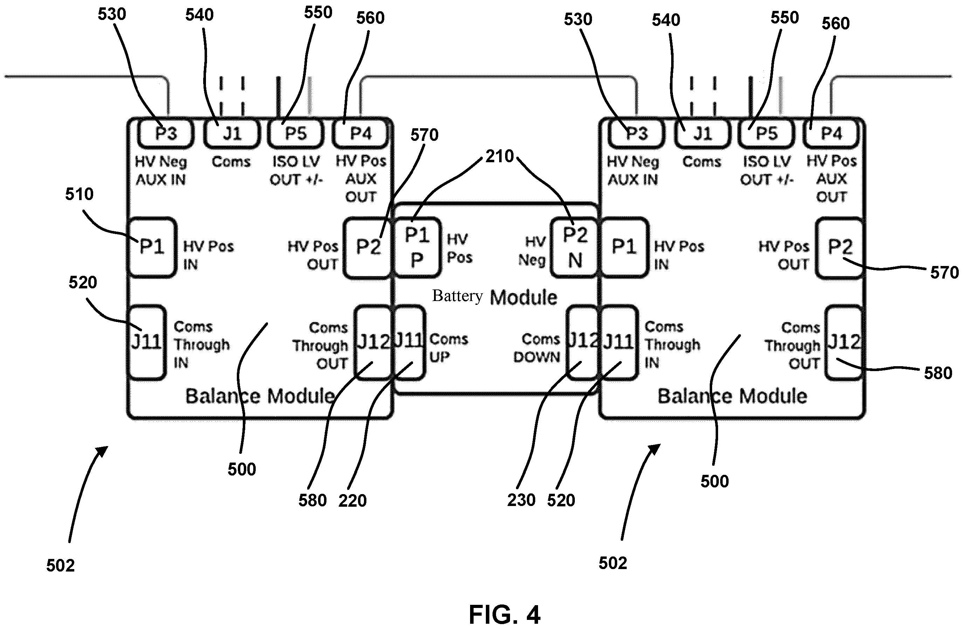

Referring to FIG. 4, a schematic view of a battery module 200 is illustrated, in accordance with various embodiments. A plurality of active balancing modules 502 can be coupled to a battery module 200 in various embodiments. A single battery module may be coupled to two active balancing modules in series, as illustrated, though the present disclosure is not limited in this regard. A high voltage positive terminal of the battery module can be coupled to the high voltage positive output of a first active balancing module, and the high voltage negative terminal of the battery module can be electronically coupled to the high voltage positive input of a second active balancing module.

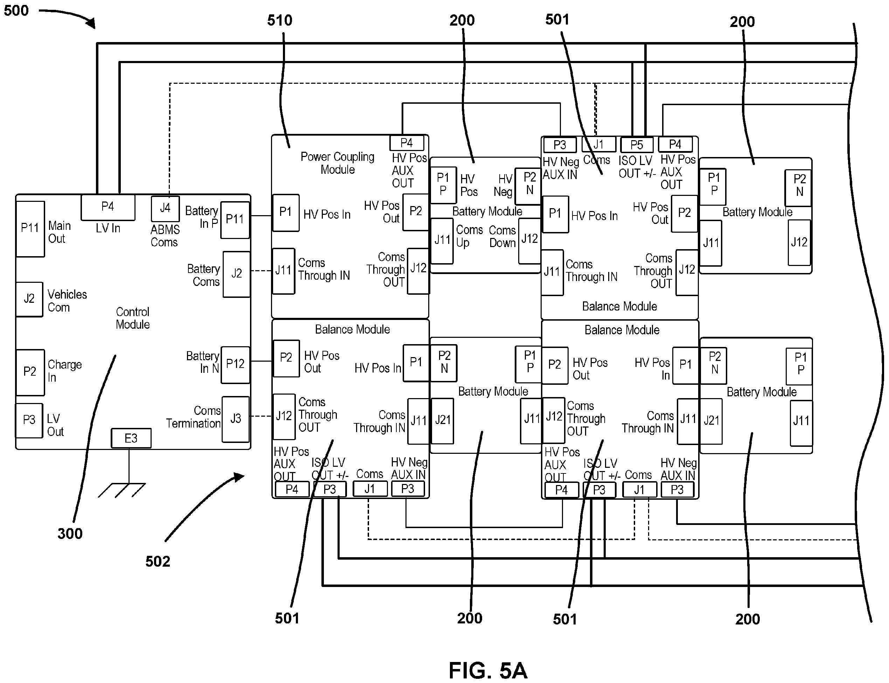

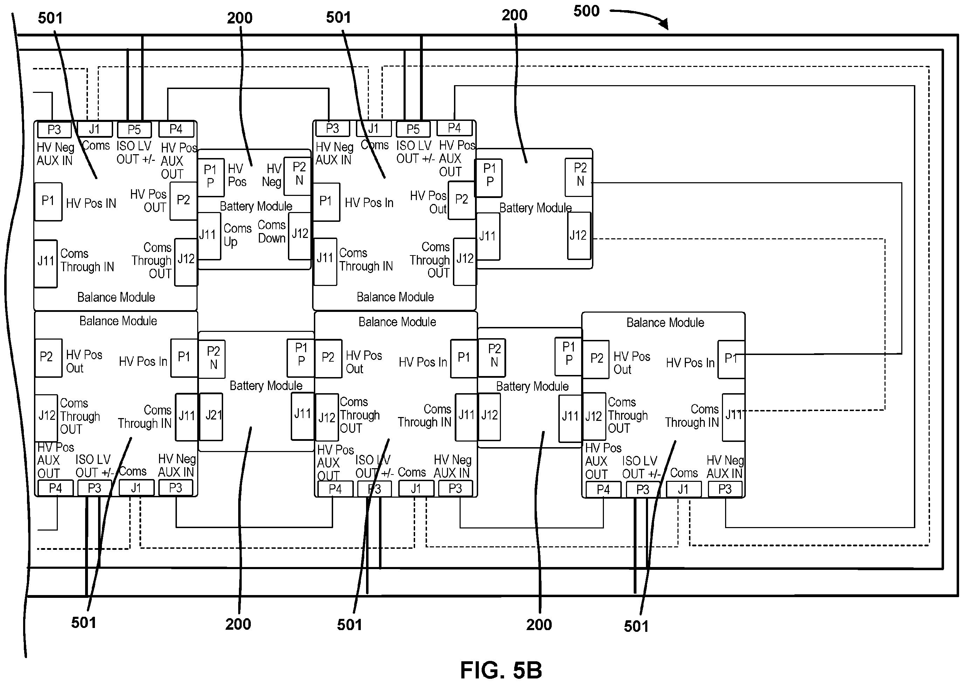

Referring now to FIGs. 5A and 5B, in various embodiments, a plurality of battery modules 200 can be coupled between a plurality of active balancing modules 501 in series to form a battery system 500. In various embodiments, the active balancing modules 501 and battery modules 200 may be configured in an arrangement not in series, wherein the battery modules are coupled to the active balancing module. This battery system may also comprise a control module 300, as shown in FIGs. 5A and 5B. In various embodiments, the battery system of FIGs. 5A and 5B can include a cradle or rack enabling a battery module to be easily coupled and uncoupled to the battery system. In various embodiments, a power coupling module 610 can be disposed on a high side or a low side of the battery system 500. In this regard, only one active balancing module 100 per battery module 200 may be desirable. Accordingly, on one side a string of battery modules for the battery system 500 a power coupling module 610 can be provided to facilitate connection to the control module (i.e., since only one active balancing module may be desired per battery module 200), in accordance with various embodiments. In various embodiments, the power coupling module 610 is configured to provide a connection between a power terminal of a battery module 200 and the control module 300. Stated another way, in an example embodiment, a battery system 500 may comprise N battery modules 200 and N+1 active balancing modules. The N battery modules 200 and N+1 active balancing modules may be connected in series with a battery module 200 between each active balancing module 501. In an example embodiment, a first active balancing module 501 is connected between the positive battery input terminal of the control module 300 and a first battery module 200, a second active balancing module 501 is connected between the first battery module 200 and a second battery module 200, and so forth in series to an Nth battery module, where an N+1th active balancing module is connected between an Nth battery module 200 and the negative battery input terminal of the control module 300.

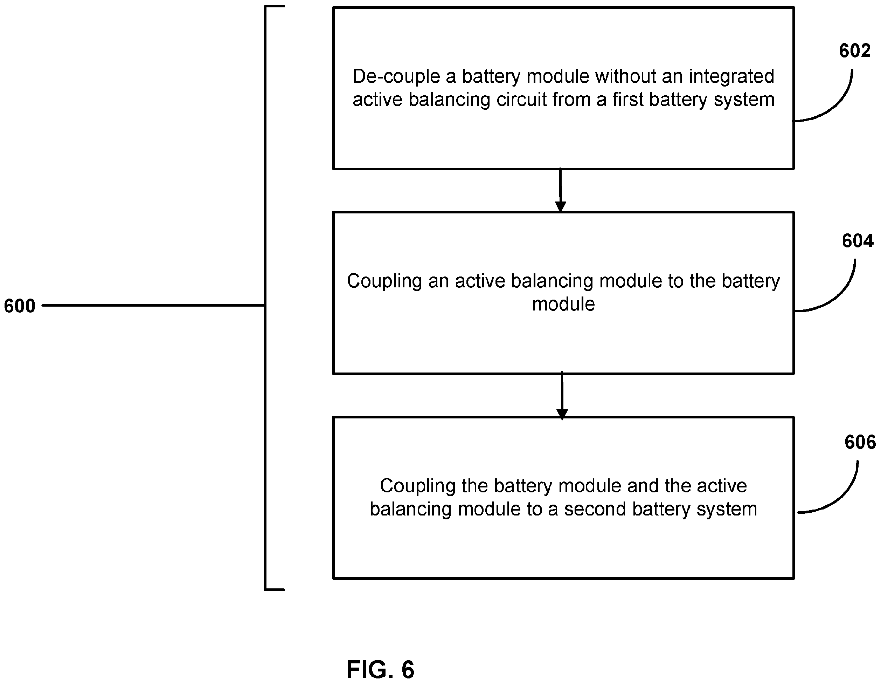

Referring now to FIG. 6, a method 600 of retrofitting a battery module for secondary life is illustrated, in accordance with various embodiments. In various embodiments, an active balancing module may be coupled to a battery module. The method 600 comprises decoupling a battery module that does not have an integrated active balancing circuit from a first battery system (step 602). The method 600 further comprises coupling the active balancing module to the battery module (step 604). In this regard, the active balancing module 100 described previously herein can be coupled to a battery module 200 prior to integrating the battery module 200 into a secondary life application where a balancing circuit would be desirable. In various embodiments, the method 600 further comprises coupling the battery module and the active balancing module to a second battery system (step 606). The first battery system can have a plurality of battery modules and the second battery system can have a plurality of battery modules. In the second battery system, each of the battery modules may be coupled to active balancing modules. In this regard, active balancing may be desirable for a secondary life application for reasons described previously herein.

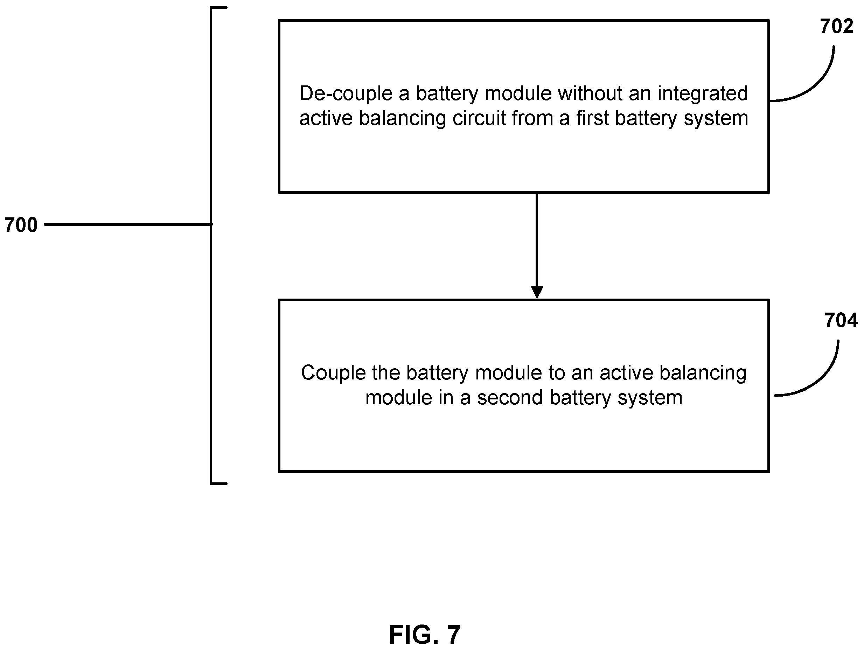

Referring now to FIG. 7, a method 700 of retrofitting a battery module for secondary life is illustrated, in accordance with various embodiments. In various embodiments, the battery module may be coupled into a battery system that comprises an active balancing module and wherein the battery system is configured to receive the battery module. The method 700 comprises de-coupling a battery module without an integrated active balancing circuit from a first battery system (step 702). The method 700 further comprises coupling the battery module to an active balancing module in a second battery system (step 704). In this regard, the active balancing module (e.g., active balancing module 100 from FIG. 1), can be pre-installed in a second battery system (e.g., a secondary life application). Accordingly, the battery module can be directly installed, and coupled to, the active balancing module that is pre-installed in the second battery system, in accordance with various embodiments. In various embodiments, the active balancing module can be coupled to a second battery system. This allows any battery module to be coupled into the second battery system. In some embodiments this method includes coupling a battery module to a second battery system that is a cradle system for a battery module, wherein the cradle system comprises one or more active balancing modules and one or more battery modules.

A battery system is disclosed herein. In various embodiments, the battery system comprises: a plurality of battery modules; a plurality of active balancing modules, wherein each of the plurality of active balancing modules is removably coupled to a battery module in the plurality of battery modules; and a control module electrically coupled to both the plurality of battery modules and the plurality of active balancing modules, wherein the control module is configured to balance a loading of the plurality of battery modules through the plurality of active balancing modules.

In various embodiments, the control module is configured to maintain, through operation of the plurality of active balancing modules, equivalent states of charge in each of the plurality of battery modules during operation of the battery system. "Equivalent states of charge" as referred to herein is maintaining a state of charge that is plus or minus 10% from a nominal state of charge, or plus or minus 5% from a nominal state of charge, or plus or minus 3% of a nominal state of charge, or plus or minus 2% of a nominal state of charge.

In various embodiments, the control module is configured to draw energy from a first of the plurality of battery modules with a highest state of charge and transferring the energy to one or more battery modules in the plurality of battery modules with a lesser states of charge to reach near equal voltages (e.g., within plus or minus 10% of a nominal voltage, within plus or minus 5% of a nominal voltage, within plus or minus 3% of a nominal voltage, within plus or minus 2% of a nominal voltage, or the like) in each of the plurality of battery modules.

In various embodiments, each of the active balancing modules can comprise one or more of a capacitor, an inductor, a DC-DC converters, or the like. The one or more of the capacitor, the inductor, the DC-DC converters, or the like can allow energy to be passed therethrough during operation of the active balancing module.

In various embodiments, the control module can be configured to operate one or more of the plurality of active balancing modules to facilitate a current bypass of one of the plurality of battery modules based on a state of charge of the battery module exceeding a threshold state of charge (e.g., a maximum state of charge). For example, the battery module being bypassed may have a maximum state of charge relative to a remaining of the plurality of battery modules, so the remaining battery modules can then receive the current, and the process repeated, until all of the plurality of battery modules reach the maximum state of charge.

In various embodiments, the control module is configured to facilitate "cell-to-cell" balancing methods at the battery module level. For example, the control module is configured to pass, via one of the plurality of active balancing modules, excess energy in one battery module to an adjacent of the plurality of battery modules if the adjacent of the plurality of battery module is at a lower state of charge. In this regard, the battery system can comprise a 1:1 ratio of battery modules to active balancing modules. In various embodiments, each of the plurality of active balancing modules can be independently controlled. In various embodiments, the control module can be configured to actively balance one of the plurality of battery modules through operation of one of the plurality of active balancing modules by coupling (e.g., via an electrical switch) a capacitor to a battery module with a high state of charge, then decoupling the capacitor and recoupling the capacitor to an adjacent battery module with a lower state of charge. In various embodiments, inductors may also be utilized instead of the capacitor to pass the energy, via one of the plurality of active balancing modules, from one battery module to an adjacent battery module for active cell balancing using cell-to-cell methods.

In various embodiments, the battery system further comprises a cradle system comprising the plurality of active balancing modules installed therein. The cradle system can be configured to receive the plurality of battery modules therein. In various embodiments, one of the plurality of battery modules can be disposed between a first and a second of the plurality of active balancing modules. After receiving the battery module, the battery module can be electrically coupled to the first and the second active balancing modules (e.g., as shown in FIGs. 5A and 5B), in accordance with various embodiments.

In various embodiments, each of the plurality of battery modules is disposed between one of the plurality of active balancing modules and a second of the plurality of active balancing modules.

In various embodiments, each of the plurality of battery modules is coupled to one of the plurality of active balancing modules.

In various embodiments, a ratio of a number of battery modules in the plurality of battery modules to a number of active balancing modules in the plurality of active balancing modules is 1:1.

In various embodiments, each of the plurality of battery modules is coupled together in series. In various embodiments, the battery system further comprises a tagout circuit breaker in series with the plurality of battery modules.

In various embodiments, each of the plurality of battery modules is coupled together in parallel.

In various embodiments, the battery system further comprises a power coupling module coupled to the plurality of battery modules.

In various embodiments, the plurality of active balancing modules is encapsulated in an enclosure to form an active balancing module. In various embodiments, each of the plurality of active balancing modules comprises: a housing; a high voltage negative auxiliary input coupled to the housing; a high voltage positive input terminal coupled to the housing; a communication terminal coupled to the housing; a low voltage output terminal coupled to the housing; a high voltage positive auxiliary output coupled to the housing; and a high voltage positive output terminal coupled to the housing. In various embodiments, the high voltage positive input terminal is coupled to the plurality of battery modules. In various embodiments, the communication terminal is coupled to the plurality of battery modules.

In various embodiments, the control module comprises: a low voltage input terminal in electronic communication with a high volage output terminal of each of the plurality of active balancing modules; a communications input terminal and a communications output terminal, the communications input terminal in electrical communication with the communications output terminal via a daisy chain from the communications input terminal through each of the plurality of battery modules and the plurality of active balancing modules and out the communications output terminal; at least one vehicle communication terminal; and a low voltage output terminal.

An active balancing module for a secondary life application of a battery module of an electrically powered aircraft, the active balancing module comprising: an active balancing circuit configured to be electrically coupled to power terminals of at least one of the battery module, the active balancing circuit configured to provide active balancing between adjacent battery modules during operation of a battery system with the adjacent battery modules disposed therein; and an enclosure encompassing the active balancing circuit.

In various embodiments, a configuration coupling the active balancing module to the battery module is reversible.

In various embodiments, the active balancing circuit is bi-directional.

In various embodiments, the active balancing module further comprises a positive high voltage input coupled to the enclosure; a negative high voltage input coupled to the enclosure; a positive low voltage output coupled to the enclosure; a negative low voltage output coupled to the enclosure; and a communication terminal.

In various embodiments, the active balancing module is configured to physically couple to the exterior of the battery module.

In various embodiments, the active balancing module is configured to be physically coupled to the battery module using a cradle system.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts, but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, any of the above-described concepts can be used alone or in combination with any or all the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible considering the above teaching.

## Claims

1. A battery system comprising:
a plurality of battery modules;
a plurality of active balancing modules, wherein each of the plurality of active balancing modules is removably coupled to a battery module in the plurality of battery modules; and
a control module electrically coupled to both the plurality of battery modules and the plurality of active balancing modules, wherein the control module is configured to balance a loading of the plurality of battery modules through the plurality of active balancing modules.

2. The battery system of claim 1, further comprising a cradle system configured to receive each of the plurality of battery modules therein, wherein one of the plurality of battery modules is retained between a first and a second of the plurality of active balancing modules.

3. The battery system of claim 1 or 2, wherein each of the plurality of battery modules is disposed between one of the plurality of active balancing modules and a second of the plurality of active balancing modules.

4. The battery system of any preceding claim, wherein each of the plurality of battery modules is coupled to one of the plurality of active balancing modules.

5. The battery system of any preceding claim, wherein a ratio of a number of battery modules in the plurality of battery modules to a number of active balancing modules in the plurality of active balancing modules is 1:1.

6. The battery system of any preceding claim, wherein the control module is configured to pass, via one of the plurality of active balancing modules, excess energy in one battery module to an adjacent of the plurality of battery modules if the adjacent of the plurality of battery modules is at a lower state of charge, wherein each of the plurality of battery modules is coupled together in series.

7. The battery system of any preceding claim, further comprising a tagout circuit breaker in series with the plurality of battery modules.

8. The battery system of any preceding claim, wherein each of the plurality of battery modules is coupled together in series through one of the plurality of active balancing modules.

9. The battery system of any preceding claim, further comprising a power coupling module coupled to the plurality of battery modules.

10. The battery system of any preceding claim, wherein each of the plurality of active balancing modules is encapsulated in an enclosure.

11. The battery system of claim 10, wherein each of the plurality of active balancing modules comprises:
the enclosure;
a high voltage negative auxiliary input coupled to the enclosure;
a high voltage positive input terminal coupled to the enclosure;
a communication terminal coupled to the enclosure;
a low voltage output terminal coupled to the enclosure;
a high voltage positive auxiliary output coupled to the enclosure; and
a high voltage positive output terminal coupled to the enclosure.

12. The battery system of claim 11, wherein the high voltage positive input terminal for each of the plurality of active balancing modules is coupled to one of the plurality of battery modules.

13. The battery system of claim 11 or 12, wherein the communication terminal is coupled to the plurality of battery modules.

14. The battery system of any preceding claim, wherein the control module comprises:
a low voltage input terminal in electronic communication with a high volage output terminal of each of the plurality of active balancing modules;
a communications input terminal and a communications output terminal, the communications input terminal in electrical communication with the communications output terminal via a daisy chain from the communications input terminal through each of the plurality of battery modules and the plurality of active balancing modules and out the communications output terminal;
at least one vehicle communication terminal; and
a low voltage output terminal.

15. An active balancing module for a secondary life application of a battery module of an electrically powered aircraft, the active balancing module comprising:
an active balancing circuit configured to be electrically coupled to power terminals of at least one of the battery module, the active balancing circuit configured to provide active balancing between adjacent battery modules during operation of a battery system with the adjacent battery modules disposed therein; and
an enclosure encompassing the active balancing circuit.
